# EUROPEAN PATENT APPLICATION

(11) **EP 4 651 156 A2**
(43) Date of publication of application: **19.11.2025**
(21) Application number: 23901749.4
(22) Date of filing: 20.10.2023
(51) Int. Cl.: G21F 9/30, C03B 3/02, C03B 5/00

(54) **APPARATUS FOR LOADING HEATING ELEMENT FOR VITRIFICATION MELTING FURNACE**

(30) Priority: 09.01.2023 KR 20230002825
(71) Applicant: Korea Hydro & Nuclear Power Co., Ltd, Gyeongju-si, Gyeongsangbuk-do 38120 (KR)
(72) Inventor: HWANG, Seok Ju, Daejeon 34101 (KR); KIM, Deuk Man, Daejeon 34101 (KR); KIM, Cheon Woo, Daejeon 34101 (KR)
(74) Representative: Glawe, Delfs, Moll
(86) International application number: PCT/KR2023/016365
(87) International publication number: WO 2024/150900

(57) **Abstract**

An apparatus for charging a heating element for heating a glass melt, to restart a vitrified melting furnace, during emergency stop of the vitrified melting furnace for vitrifying radioactive waste is disclosed. The apparatus for charging a heating element into a vitrified melting furnace according to the present invention comprises a main frame, a universal joint positioned at one end of the main frame, at least one heating element binding portion rotating by being connected to the universal joint, and a gripper positioned at an end of the heating element binding portion, gripping the heating element.

## Description

### Technical Field

The present invention relates to an apparatus for charging a heating element for heating a glass melt, to restart a vitrified melting furnace, during emergency stop of the vitrified melting furnace for vitrifying radioactive waste.

### Background Art

Radioactive waste generated in a nuclear power plant or a radioisotope utilization engine should be safely discarded. The radioactive waste is classified into low and intermediate-level waste and high-level waste depending on the intensity of radioactivity. Most of the low and intermediate-level radioactive waste is waste generated during the operation of the nuclear power plant, for example, a filter medium, an ion exchange resin, a concentrated residue of a waste liquid evaporator, and miscellaneous solids such as work clothes, tools and waste papers, which are used by radiation workers.

The low and intermediate-level radioactive waste is sealed in a waste drum by mixing solidifiers, for example, cements or paraffin, and then solidified or compressed to be sealed in the waste drum and kept in a safe place such as a waste management facility. However, significant manpower and cost may be required for establishment and maintenance of the waste management facility, and there is a great difficulty in the establishment thereof due to social avoidance, thereby leading to a serious social problem.

Meanwhile, as a disposal technology of the low and intermediate-level radioactive waste, the waste is subjected to combustion and pyrolysis and then treated into vitrified form by a vitrification technique that melts the waste with glass at a high temperature. According to the vitrification technology of the low and intermediate-level radioactive waste, the amount of waste can be significantly reduced, and radiation leakage can be permanently blocked.

### Invention

### Technical Problem

In the early stage of vitrification of a vitrified melting furnace for vitrification of radioactive waste, a worker directly charged a heating element without a separate device, but it was difficult for the worker to work closely in an environment with radioactive waste in an emergency.

In the event of an emergency stop of the vitrified melting furnace, as a vitrification process was restarted by completely removing the glass inside a glass melt, there was a risk of exposure or accident of the worker when removing the glass.

In order to form an initial glass melt in a vitrification process, a heating element (Ti-ring) is charged into the glass melt, heated and then oxidized. During the process of disposing radioactive waste, an internal glass melt is cooled when an unexpected stop occurs, and thus the heating element should be additionally charged to restart the melting furnace.

Accordingly, the present invention is to solve the above problems, and it is to provide an apparatus for charging a heating element for heating a glass melt capable of performing a restarting operation in a state that an internal glass is solidified without a glass removal operation during an abnormal stop.

The objects of the present invention are not limited to those mentioned above and additional objects of the present invention, which are not mentioned herein, will be clearly understood by those skilled in the art from the following description of the present invention.

### Technical Solutions

An apparatus for charging a heating element into a vitrified melting furnace according to the embodiment of the present invention to achieve the above objects may comprise a main frame, a universal joint positioned at one end of the main frame, at least one heating element binding portion rotating by being connected to the universal joint, and a gripper positioned at an end of the heating element binding portion, gripping the heating element.

The gripper may include a support portion and a grip portion connected to the support portion.

The grip portion may include a first finger portion, a second finger portion coupled to the first finger portion, a first joint coupling the first finger portion to the second finger portion and a second joint coupling each of the first finger portion and the second finger portion to the support portion.

The apparatus may further comprise an adjustment wire connected to the first joint, adjusting movement of the first finger portion and the second finger portion so that the first finger portion and the second finger portion grip the heating element or release the grip of the heating element.

The apparatus may further comprise an adjustment portion adjusting release and fixing of the adjustment wire, positioned at the other end of the main frame.

The apparatus may further comprise a reference portion positioned to slide on the main frame, controlling a behavior of the heating element binding portion.

When the reference portion slides in a direction toward the one end of the main frame, the heating element binding portion may be rotated to be far away from the main frame.

When the reference portion slides in a direction opposite to the one end of the main frame, the heating element binding portion may be rotated to be close to the main frame.

Details of the other embodiments are included in the detailed description and drawings.

### Advantageous Effects

According to the present invention, there is provided an apparatus for charging a heating element for heating a glass melt capable of performing a restarting operation in a state that an internal glass is solidified without a glass removal operation during an abnormal stop.

### Brief Description of the Drawings

FIG. 1 illustrates an apparatus for charging a heating element into a vitrified melting furnace according to the embodiment of the present invention.
FIG. 2 illustrates a gripper of an apparatus for charging a heating element into a vitrified melting furnace according to the embodiment of the present invention.
FIG. 3 illustrates driving of a reference portion of an apparatus for charging a heating element into a vitrified melting furnace according to the embodiment of the present invention.
FIG. 4 illustrates that a heating element is charged into a vitrified melting furnace by using an apparatus for charging a heating element of a vitrified melting furnace according to the embodiment of the present invention.

### Best Mode for Carrying Out the Invention

The present invention provides an apparatus for charging a heating element into a vitrified melting furnace that vitrifies radioactive waste, wherein the apparatus comprises a main frame, a universal joint positioned at one end of the main frame, at least one heating element binding portion rotating by being connected to the universal joint, and a gripper positioned at an end of the heating element binding portion, gripping the heating element.

### Mode for Carrying Out the Invention

Hereinafter, the preferred embodiments of the present invention will be described in detail with reference to the accompanying drawings. Advantages and features of the present invention and methods of achieving the advantages and features will be apparent from the following embodiments that will be described in detail with reference to the accompanying drawings. The present invention may, however, be embodied in various forms, and should not be construed as being limited to the embodiments set forth herein. Rather, these embodiments are provided so that the present invention will be thorough and complete, and will fully convey the scope of the present invention to those skilled in the art. Further, the present invention is only defined by the scope of the claims. Throughout the specification, the same reference numerals refer to the same elements.

Hereinafter, an apparatus for charging a heating element into a vitrified melting furnace according to one embodiment of the present invention will be described.

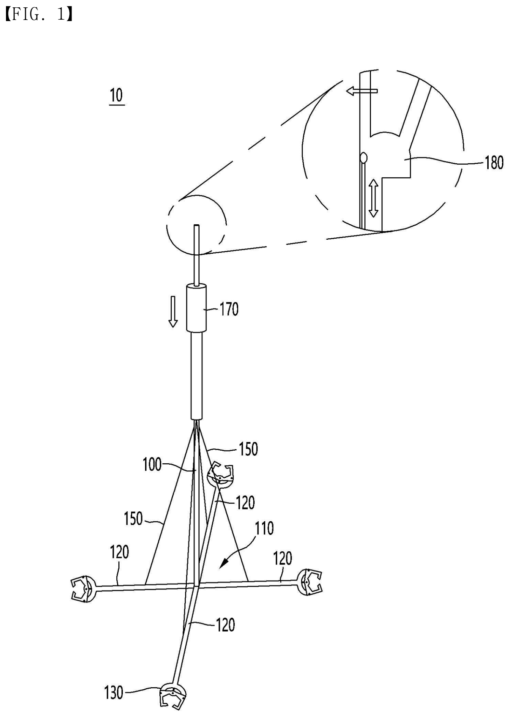

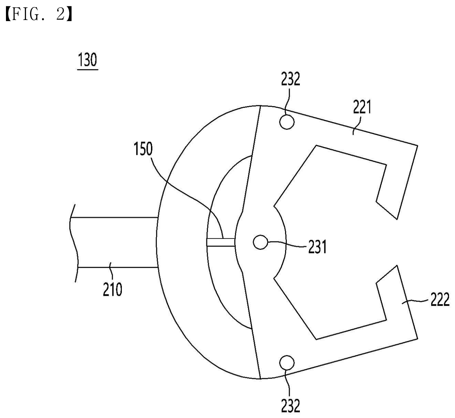

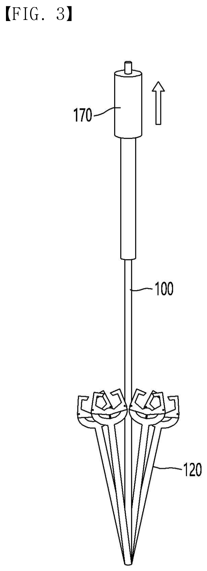

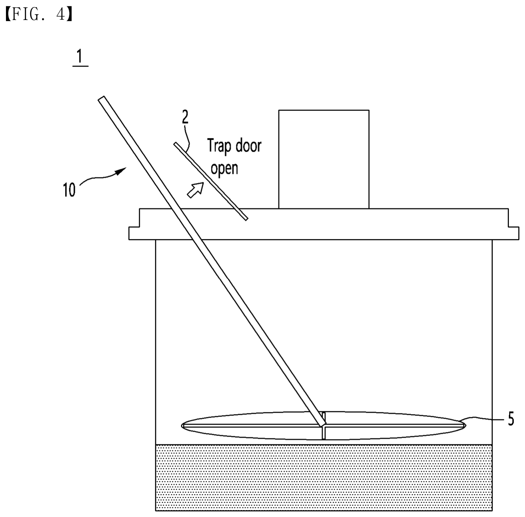

FIG. 1 illustrates an apparatus for charging a heating element into a vitrified melting furnace according to the embodiment of the present invention. FIG. 2 illustrates a gripper of an apparatus for charging a heating element into a vitrified melting furnace according to the embodiment of the present invention. FIG. 3 illustrates driving of a reference portion of an apparatus for charging a heating element into a vitrified melting furnace according to the embodiment of the present invention. FIG. 4 illustrates that a heating element is charged into a vitrified melting furnace by using an apparatus for charging a heating element into a vitrified melting furnace according to the embodiment of the present invention.

Meanwhile, a vitrification treatment system for radioactive waste is a facility that treats radioactive waste more safely, and may not only remarkably reduce a volume of low and intermediate-level radioactive waste but also minimize the leakage of radioactive substances into the periphery in any environment, thereby greatly improving the safety in disposal of radioactive waste.

The vitrification treatment system for radioactive waste may fundamentally block the leakage of radioactive materials into the environment by coupling radioactive waste with a glass structure and may also remarkably reduce the volume of radioactive waste. The vitrification technology may reduce the initial generation volume of all combustible and non-combustible low and intermediate-level radioactive waste generated from a nuclear power plant to 1/20 or less. This may greatly contribute to the stable proceeding of disposal projects for the construction of management facilities as well as making sure of the safety in disposal of radioactive waste.

The vitrification treatment system for radioactive waste may approximately vitrify radioactive waste through the following process.

Glass raw materials are put in an induction heating vitrified melting furnace and then glass is melted by the heat induced by the electromagnetic field. When a glass melt at about 1100°C is made, the finely crushed waste stored in a radioactive waste storage is supplied to the glass melt through a radioactive waste supply device, so that it is decomposed in the glass melt, and radioactive materials are rigidly coupled with a glass component. Combustible wastes that may be treated in the induction heating vitrified furnace include clothes, gloves, shoes, waste papers, etc., which are used by workers, and a low-radioactive waste resin used for water purification in the nuclear power plant.

Radionuclides that constitute a glass structure cannot escape from the glass structure under any environmental conditions. The robustness in coupling of this glass structure with the radionuclides has been confirmed through internationally recognized leaching tests.

The glass melt in the vitrified melting furnace may be produced as follows. In other words, an initial ignition method of glass, which is performed for vitrification in a low-temperature melting furnace for the disposal of low and intermediate-level radioactive waste, is carried out in the following way. An inner space (e.g., a diameter of 55 cm) of the vitrified melting furnace is filled with a certain amount (e.g., about 60 kg) of glass frit to make a glass melt before the waste is put into the vitrified melting furnace, and a titanium metal ring with a predetermined diameter (e.g., about 36 cm in inner diameter and about 38 cm in outer diameter) is charged into a solid glass frit at a point of a predetermined height (e.g., 16 or 18 cm) from the bottom of the vitrified melting furnace.

In this state, the output of a high frequency generator is gradually increased to generate an electromagnetic wave from an inductor surrounding the periphery of the vitrified melting furnace and allows the electromagnetic wave to be concentrated on the titanium metal ring 5, whereby an induced current is generated in the titanium metal ring 5. The titanium metal ring 5 is ignited at a certain point where the induced current is concentrated by the highly integrated electromagnetic wave.

In this way, the thermal and electrical energy generated by the titanium metal ring 5 is transferred to the glass to ignite and melt the glass. The situation at the time of ignition may be seen even through visual observation, but may be easily seen through changes in an input voltage and current flowing into the low-temperature vitrified melting furnace. Before the titanium metal ring 5 is ignited, the voltage and current increase while drawing a gentle upward curve and as soon as the ignition occurs, physical properties of the glass change, whereby the voltage rapidly drops and the current sharply rises. Through this process, the glass melt may be formed by the heating element 5 charged into the vitrified melting furnace. The heating element 5 is oxidized and thus cannot be reused.

Meanwhile, in the middle of the process of treating radioactive waste, a situation in which the vitrified melting furnace or the like is suddenly stopped may occur. When the vitrified melting furnace is suddenly stopped, an internal melt in the vitrified melting furnace is cooled, and for restart, it is necessary to charge an additional heating element so as to melt the melt. The present invention relates to an apparatus for charging a heating element into a vitrified melting furnace so that a melt in the vitrified melting furnace may be reheated when a vitrification treatment system is unexpectedly stopped during a vitrification process.

Referring to FIG. 1, an apparatus 10 for charging a heating element into a vitrified melting furnace according to the embodiment of the present invention is to charge the heating element into the vitrified melting furnace that vitrifies radioactive waste. The apparatus 10 includes a main frame 100, a universal joint 110 positioned at one end of the main frame 100, at least one heating element binding portion 120 rotating by being connected to the universal joint 110, and a gripper 130 positioned at the end of the heating element binding portion 120, gripping the heating element 5.

The main frame 100 constitutes a main body of the apparatus 10 for charging a heating element into a vitrified melting furnace, and may have a bar shape extended from one end to the other end.

The universal joint 110 is positioned at one end of the main frame 100. The heating element binding portion 120 is coupled to the universal joint 110. The heating element binding portion 120 may rotate at one end of the main frame 100 by the universal joint 110. Also, the universal joint 110 may be coupled while rotating at one end of the main frame 100. Therefore, the main frame 100 may also rotate by the universal joint 110.

The heating element binding portion 120 may be positioned at one end of the main frame 100 by the universal joint 110.

The heating element binding portion 120 may be a bar type in the form of a bar. A plurality of heating element binding portions 120 may be coupled to the universal joint 110. As the plurality of heating element binding portions 120 are configured, a load of the heating element 5 gripped to the end of the heating element binding portion 120 may be distributed to each of the plurality of heating element binding portions 120.

One end of the heating element binding portion 120 may be connected to the universal joint 110, and may be coupled while rotating in the universal joint 110. For example, the heating element binding portion 120 may rotate at an angle within 90° by the universal joint 110. The heating element binding portion 120 may rotate to be far away from the main frame 100, or may rotate to be close to the main frame 100.

The gripper 130 may be positioned at the end of the heating element binding portion 120, and may grip the heating element 5. The gripper 130 may be positioned at the end of each of the heating element binding portions 120. When the number of the heating element binding portions 120 is plural, the gripper 130 may be provided as a plurality of grippers 130. For example, FIG. 1 shows four heating element binding portions 120, and the gripper 130 may be provided at the end of each of the heating element binding portions 120.

Referring to FIG. 2, the gripper 130 may include a support portion 210 and a grip portion 220 connected to the support portion 210.

The support portion 210 may include a hole (not shown) coupled to the heating element binding portion 120 and through which an adjustment wire 150 capable of adjusting a first finger portion 221 and a second finger portion 222 of the grip portion 220 passes. The support portion 210 may support the grip portion 220 so that the first and second finger portions 221 and 222 of the grip portion 220 may grip the heating element 5.

The grip portion 220 of the gripper 130 may include a first finger portion 221, a second finger portion 222 coupled to the first finger portion 221, a first joint 231 coupling the first finger portion 221 to the second finger portion 222, and a second joint 232 coupling each of the first finger portion 221 and the second finger portion 222 to the support portion 210.

The first finger portion 221 and the second finger portion 222 are coupled by the first joint 231 and the second joint 232, and may move to grip the heating element 5. That is, when the first finger portion 221 and the second finger portion 222 of the grip portion 220 grip the heating element 5, the first finger portion 221 and the second finger portion 222 may move so that a distance between the first finger portion 221 and the second finger portion 222 becomes close.

On the other hand, when the first finger portion 221 and the second finger portion 222 of the grip portion 220 charge the heating element 5 into the vitrified melting furnace to release the grip of the heating element 5, the first finger portion 221 and the second finger portion 222 may move so that the distance between the first finger portion 221 and the second finger portion 222 becomes far away.

As described above, the apparatus may include an adjustment wire 150 to adjust the movements of the first finger portion 221 and the second finger portion 222. That is, the apparatus 10 for charging heating element into a vitrified melting furnace according to the embodiment of the present invention may include an adjustment wire 150 connected to the first joint 231, adjusting the movement of the first finger portion 221 and the second finger portion 222 so that the first finger portion 221 and the second finger portion 222 grip the heating element 5 or release the grip of the heating element 5.

The adjustment wire 150 may adjust the movement of the first finger portion 221 and the second finger portion 222 by applying tension of the first joint 231 or not applying the tension.

The adjustment wire 150 may be connected to the first joint 231 through the hole of the support portion 210. Furthermore, the adjustment wire 150 may pass through the inside of the heating element binding portion 120 by an adjustment wire through hole (not shown) formed in the heating element binding portion 120. That is, the adjustment wire 150 may be positioned to pass through the support portion 210 of the gripper 130 and the inside of the heating element binding portion 120. Meanwhile, the adjustment wire 150 may pass through a portion of the heating element binding portion 120, and then may be ejected to the outside at a middle end portion of the heating element binding portion 120. The ejected adjustment wire 150 may be connected to an adjustment portion 180 that will be described later.

The adjustment portion 180 may adjust the release and fixing of the adjustment wire 150, and may be positioned at the other end of the main frame 100. For example, when the adjustment wire 150 is fixed by the operation of the adjustment portion 180, tension may be applied to the first finger portion 221 and the second finger portion 222, and the first finger portion 221 and the second finger portion 222 may grip the heating element 5. Also, when the adjustment wire 150 is released by the operation of the adjustment portion 180, tension is not applied to the first finger portion 221 and the second finger portion 222, and thus the first finger portion 221 and the second finger portion 222 may release the grip of the heating element 5.

Meanwhile, the apparatus 10 for charging a heating element into a vitrified melting furnace according to the embodiment of the present invention may include a reference portion 170 positioned to slide on the main frame 100, controlling a behavior of the heating element binding portion 120.

Referring to FIGS. 1 and 3, when the reference portion 170 slides in a direction toward one end of the main frame 100, the heating element binding portion 120 may be rotated to be far away from the main frame 100. The heating element binding portion 120 may be rotated to form an angle of 90° with the main frame 100.

Meanwhile, when the reference portion 170 slides in a direction opposite to one end of the main frame 100, the heating element binding portion 120 may be rotated to be close to the main frame 100. The heating element binding portion 120 is rotated to be close to the main frame 100, so that the apparatus for charging a heating element into a vitrified melting furnace may be easily ejected to the outside of the vitrified melting furnace.

The case that the heating element 5 is charged into the vitrified melting furnace by using the apparatus 10 for charging a heating element into a vitrified melting furnace according to the embodiment of the present invention will be described with reference to FIG. 4.

In the early stage of vitrification, a worker directly charged the heating element without a separate device, but it was difficult for the worker to work closely in an environment with radioactive waste in an emergency. In the event of an emergency stop of the vitrified melting furnace, as a vitrification process was restarted by completely removing the glass inside the glass melt, there was a risk of exposure or accident of the worker when removing the glass.

In order to form an initial glass melt in the vitrification process, a heating element (Ti-ring) is charged into the glass melt, heated and then oxidized. During the process of treating radioactive waste, an internal glass melt is cooled when an unexpected stop occurs, and thus the heating element should be additionally charged to restart the melting furnace.

To this end, a trap door 2 in an upper chamber of a vitrified melting furnace 1 is opened to make sure of a space for additional charging of the heating element 5.

Afterwards, the worker (or robot) charges the heating element 5 of a circular shape into the vitrified melting furnace by using the apparatus 10 for charging a heating element into a vitrified melting furnace. In more detail, the gripper 130 grips the heating element 5 at the end of the heating element binding portion 120. To this end, tension is applied to the first finger portion 221 and the second finger portion 222 of the gripper 130 by the adjustment wire 150, and the adjustment wire 150 is fixed to the adjustment portion 180.

The apparatus 10 for charging a heating element into a vitrified melting furnace 1, which has gripped the heating element 5, is put into the vitrified melting furnace 1 through the trap door 2. Afterwards, the tension applied to the gripper 130 is released through the adjustment wire 150 so that the heating element 5 gripped by the first and second finger portions 221 and 222 is charged onto the glass melt. Then, the reference portion 170 on the main frame 100 is slid in a direction toward the other end, so that the heating element binding portion 120 is rotated to be close to the main frame 100 (see FIG. 3), and then the apparatus 10 for charging a heating element into a vitrified melting furnace 1 is ejected from the vitrified melting furnace 1.

The heating element 5 is charged into the vitrified melting furnace 1 through the above process by using the apparatus 10 for charging a heating element into a vitrified melting furnace according to the embodiment of the present invention..

Although the embodiments of the present invention have been described with reference to the accompanying drawings, it will be apparent to those skilled in the art that the present invention may be embodied in other specific forms without departing from the spirit and essential characteristics of the specification. The above embodiments are therefore to be construed in all aspects as illustrative and not restrictive.

## Claims

1. An apparatus for charging a heating element into a vitrified melting furnace that vitrifies radioactive waste, the apparatus comprising:
a main frame;
a universal joint positioned at one end of the main frame;
at least one heating element binding portion rotating by being connected to the universal joint; and
a gripper positioned at an end of the heating element binding portion, gripping the heating element.

2. The apparatus of claim 1, wherein the gripper includes a support portion and a grip portion connected to the support portion.

3. The apparatus of claim 2, wherein the grip portion includes a first finger portion, a second finger portion coupled to the first finger portion, a first joint coupling the first finger portion to the second finger portion and a second joint coupling each of the first finger portion and the second finger portion to the support portion.

4. The apparatus of claim 3, wherein further comprising an adjustment wire connected to the first joint, adjusting movement of the first finger portion and the second finger portion so that the first finger portion and the second finger portion grip the heating element or release the grip of the heating element.

5. The apparatus of claim 4, further comprising an adjustment portion adjusting release and fixing of the adjustment wire, positioned at the other end of the main frame.

6. The apparatus of claim 1, further comprising a reference portion positioned to slide on the main frame, controlling a behavior of the heating element binding portion.

7. The apparatus of claim 6, wherein, when the reference portion slides in a direction toward the one end of the main frame, the heating element binding portion is rotated to be far away from the main frame.

8. The apparatus of claim 6, wherein, when the reference portion slides in a direction opposite to the one end of the main frame, the heating element binding portion is rotated to be close to the main frame.
